Europäisches Patentamt

European Patent Office

Office européen des brevets

(11) Veröffentlichungsnummer: **0 127 566**
A1

## (12) EUROPÄISCHE PATENTANMELDUNG

(21) Anmeldenummer: **84730033.2**

(22) Anmeldetag: **09.04.84**

(51) Int. Cl.³: **B 61 L 3/00**
B 61 L 23/00, B 61 L 27/04

(30) Priorität: **18.04.83 DE 3313952**

(43) Veröffentlichungstag der Anmeldung:
**05.12.84 Patentblatt 84/49**

(84) Benannte Vertragsstaaten:
**CH DE FR GB LI**

(71) Anmelder: **Siemens Aktiengesellschaft**
**Berlin und München Wittelsbacherplatz 2**
**D-8000 München 2(DE)**

(72) Erfinder: **Dziggel, Klaus-Peter, Dipl.-Ing.**
**Küsterstrasse 18**
**D-1000 Berlin 20(DE)**

(54) Förderanlage mit auf Fahrtrassen laufenden Förderwagen und fahrzeitbestimmenden Zählern.

(57) In den Förderwagen wird jeweils ein einer definierten Fahrzeit entsprechender Zählwert gespeichert und aus der Koinzidenz von Zählerstand und Zählwert ein die Fahrt des betreffenden Förderwagens zu einer vorbestimmten Empfangsstation einleitendes Steuersignal abgeleitet. Damit wird das Einhalten sowohl einzelner Fahrzeiten als auch kumulierter Fahrzeiten überwacht und bei Überschreiten dieser Zeiten eine automatische Umlenkung von Förderwagen an ausgewählte Empfangsstationen ermöglicht. Die Erfindung wird bevorzugt für Förderanlagen zum innerbetrieblichen Transport von Akten oder Fördergut ähnlicher Abmessungen benutzt.

EP 0 127 566 A1

0127566

SIEMENS AKTIENGESELLSCHAFT                Unsere Zeichen

Berlin und München                        VPA 83 P 4036 **E**

Förderanlage mit auf Fahrtrassen laufenden Förderwagen
und fahrzeitbestimmenden Zählern

Die Erfindung betrifft eine Förderanlage mit auf Fahrtrassen
zwischen Sendestationen und Empfangsstationen mittels eines
Elektromotors angetrieben laufenden Förderwagen zum Transport von Akten und/oder Fördergut ähnlicher Abmessungen bzw.
ähnlichen Gewichts und förderwageneigenen Zählern, denen bei
Beginn eines Sendevorgangs ein Startsignal und bei Ankunft
des Förderwagens an der jeweiligen Empfangsstation ein Stopsignal zugeführt wird.

Derartige Förderanlagen werden zumeist innerhalb von Gebäuden zum innerbetrieblichen Transport eingesetzt und weisen sowohl horizontal als auch vertikal verlaufende Trassenabschnitte auf. Im allgemeinen sind die Sendestationen und
die Empfangsstationen jeweils zu kombinierten Sende- und
Empfangsstationen zusammengefaßt, wobei der Anschluß einer
derartigen kombinierten Station an eine Fahrtrasse über eine
Weicheneinrichtung erfolgt, über die ankommende bzw. abgehende Förderwagen von einer Verbindungstrasse auf eine
Stationstrasse bzw. in umgekehrter Richtung umgelenkt
werden.

Da die in derartigen Förderanlagen fahrenden Förderwagen
Teile aufweisen, die zwar in größeren Abständen, jedoch
regelmäßig überprüft werden müssen, ist es bereits bekannt,
zu Wartungszwecken den Förderwagen elektromotorische oder
elektrolytisch arbeitende Betriebsstundenzähler zuzuweisen,
deren Anzeige visuell ausgewertet wird. Bei Erreichen einer
festgelegten Betriebszeit werden die Förderwagen einer
Wartung unterzogen. Die Betriebsstundenzähler sind dabei

Om 3 Sz / 15.04.1983

derartig in die Förderwagensteuerung einbezogen, daß jeweils während der Zeiten, in denen der Elektromotor der Förderwagen in Betrieb ist, auch der Betriebsstundenzähler läuft.

Die der Erfindung zugrunde liegende Aufgabe besteht darin, unter Benutzung der förderwageneigenen Zähler Steuerkriterien zu gewinnen, die in Abhängigkeit von bestimmten Fahrzeiten der Förderwagen zu einer direkten Beeinflussung der Wegesteuerung der Förderwagen führen. Dies wird erfindungsgemäß dadurch erreicht, daß in den Förderwagen jeweils ein einer definierten Fahrzeit entsprechender Zählwert gespeichert ist und aus der Koinzidenz von Zählerstand und Zählwert ein die Fahrt des betreffenden Förderwagens zu einer vorbestimmten Empfangsstation einleitendes Steuersignal abgeleitet wird. Dies kann beispielsweise derart geschehen, daß während jeder Fahrt von einer Sende- zu einer Empfangsstation der Zähler weitergestellt wird und auf dem an der Empfangsstation gegebenen Zählerstand verbleibt, von wo aus der Zähler bei einem nächsten Fördervorgang, in dem der Förderwagen von der Empfangsstation - nunmehr als Sendestation wirkend - an eine weitere Empfangsstation abgegeben wird, weitergestellt wird. Der der definierten Fahrzeit entsprechende Zählwert repräsentiert dabei bevorzugt die Fahrzeit des Förderwagens, nach der eine Wartung erforderlich ist; die vorbestimmte Empfangsstation, zu der der Förderwagen mittels des Steuersignals umgeleitet wird, ist dabei bevorzugt eine Wartungsstation.

Die Verarbeitung des Steuersignals kann dabei in unterschiedlicher Weise erfolgen. Beispielsweise kann mit Hilfe des Steuersignals ein Kennzeichengeber des Förderwagens gestellt werden, der von ortsfest an der Trasse angeordneten Abtasteinrichtungen abgefragt wird. Beispielsweise kann eine Leuchtdiode am Wagen geschaltet werden und eine lichtempfindliche Schalteinrichtung an einem zentral gelegenen Ort der Förderanlage angeordnet werden. Solche Orte sind z. B. Weicheneinrichtungen, an denen verschiedene Fördertrassen miteinander verbunden werden. Ist die Förderanlage
sehr groß und sehr verzweigt, können die lichtempfindlichen
Schalteinrichtungen auch an mehreren Stellen angeordnet werden. Eine den lichtempfindlichen Schalteinrichtungen nachgeschaltete Auswerteeinrichtung ist derart in die Steuerung
der Verzweigungseinrichtungen einbezogen, daß eine Weichenstellung in dem Sinne erfolgt, daß die Förderwagen an eine
Wartungsstation geführt werden. Ist die Wartungsstation nur
über mehrere Weichen zu erreichen, müssen alle diese Weichen
mit einer optisch empfindlichen Schalteinrichtung versehen
werden. Diese Maßnahme kann nur dann vermieden werden, wenn
anstelle einer direkten Umleitung zur Wartungsstation zunächst eine Umleitung zu einer ganz bestimmten - ebenfalls
zentral gelegenen - Empfangsstation erfolgt, an der die
eigentliche Zieleinstelleinrichtung der Förderwagen manuell
auf das der Wartungsstation zugehörige Ziel eingestellt
wird.

Besondere Maßnahmen zur Steuerung des Förderwagens bei Auftreten des Steuersignals können aber dann entfallen, wenn
- wie eine vorteilhafte Weiterbildung der Erfindung vorsieht -
die Förderwagen Zielspeicher zur Aufnahme von an Sendestationen erzeugten empfangsstationsbezeichnenden Zielinformationen und Abgabe der Zielinformationen an mittels Verzweigungsstellen der Fahrtrassen zugeordneten Steuereinrichtungen abfragbarer Informationsgeber aufweisen und bei Koinzidenz von Zählerstand und Zählwert dem Informationsgeber
anstelle der empfangsstationsbezeichnenden eine der vorbestimmten Empfangsstation entsprechende Zielinformation zugeführt wird. Die mittels der Einstelleinrichtungen in die
Zielspeicher eingegebene Zielinformation wird also bei Auftreten des Steuersignals zu der der vorbestimmten Empfangsstation zugehörigen Zielinformation umgeändert und über die
gleichen Informationsgeber an alle Steuereinrichtungen von
Verzweigungsstellen abgegeben. Zusätzlicher mechanischer

Aufwand für Kennzeichengeber und - beispielsweise lichtempfindliche - abtastende Schalteinrichtungen entfällt. Jeder Förderwagen kann beispielsweise eine Tastatur enthalten,
die über eine Decodiereinrichtung mit Zielspeichern verbunden ist; die Zielspeicher sind dann bei Auftreten des Steuersignals entweder überschreibbar oder der Eingang des Informationsgebers wird von dem Zielspeicher an einen anderen
Speicher, der eine der vorbestimmten Empfangsstation entsprechende Zielinformation trägt, umgeschaltet.

Als besonders vorteilhaft ist jedoch anzusehen, daß an den
Sendestationen Einstelleinrichtungen angeordnet sind, die
manuell in sie eingegebene Zielinformationen in codierter
Form drahtlos an eine entsprechend ausgebildete Empfangseinrichtung eines im Bereich der Einstelleinrichtung
befindlichen Förderwagens abgeben.

Eine vorteilhafte Weiterbildung der Erfindung sieht vor, daß
die Förderwagen einen weiteren Zähler aufweisen, der jeweils
durch ein aus dem Stopsignal abgeleitetes Setzsignal inkrementiert wird. Wenn aus der Koinzidenz des Zählerstandes des
weiteren Zählers mit einem eingestellten Zählwert ebenfalls
ein die Fahrt des betreffenden Förderwagens zu einer vorbestimmten Empfangsstation einleitendes Steuersignal abgeleitet wird, kann nach einer vorbestimmten Zahl von Sendevorgängen - Fahrt von einer Sendestation zu einer Empfangsstation - auch bereits vor Erreichen der definierten Fahrzeit eine Umlenkung der betreffenden Förderwagen zu einer
Wartungsstation durchgeführt werden.

Die im Rahmen der Erfindung vorgesehene Speicherung eines
einer definierten Fahrzeit entsprechenden Zählwertes und die
Ableitung eines Steuersignals bei Koinzidenz von Zählerstand
und Zählwert kann nicht nur zur Einhaltung bestimmter Wartungsintervalle, sondern auch zur generellen Überwachung des
Verkehrsablaufs innerhalb der Förderanlage genutzt werden.

Der einer definierten Fahrzeit entsprechende Zählwert kann beispielsweise derart eingestellt werden, daß er der bei normalem Verkehrsablauf maximalen Fahrzeit zwischen einer Sendestation und einer Empfangsstation entspricht. Erreicht der Förderwagen innerhalb dieser Zeit nicht die Empfangsstation, so erfolgt die automatische Umlenkung des Förderwagens an die vorbestimmte Empfangsstation. Ein derartiger Fall kann beispielsweise dann auftreten, wenn fälschlicherweise am Förderwagen eine Zielinformation eingestellt ist, der innerhalb der Förderanlage keine Empfangsstation entspricht. Bei bestimmten Anlagenkonfigurationen würde dies andernfalls dazu führen, daß solche Förderwagen ständig in der Förderanlage umlaufen.

Die für jeden neuen Sendevorgang notwendige Rückstellung des Zählers auf seinen Ausgangswert (Nullwert) wird gemäß einer vorteilhaften Weiterbildung der Erfindung derart durchgeführt, daß die Förderwagen einen Behälterraum mit einem Deckel aufweisen, dessen Verschlußzustand mittels einer Kontakteinrichtung überwacht ist und daß aus der Betätigung der Kontakteinrichtung beim Öffnen oder Verschließen des Behälterraumes ein Rückstellsignal für den Zähler abgeleitet ist. Ebenso ist aber auch möglich, daß eine an der Empfangsstation angeordnete Überwachungseinrichtung bei Ankunft eines Förderwagens im Sinne einer Rückstellung des Zählers auf diesen einwirkt. Sofern die Zieleinstellvorrichtungen der Förderwagen ortsfest angeordnet sind und die Zielinformationen in codierter Form drahtlos an Empfangseinrichtungen der Förderwagen abgegeben werden, können die Zieleinstelleinrichtungen auch zur Abgabe eines Rückstellsignals für den Zähler ausgenutzt werden.

Als vorbestimmte Empfangsstation, zu der ein die Fahrzeit zwischen Sendestation und Empfangsstation überschreitender Förderwagen umgelenkt wird, ist dabei zweckmäßigerweise die den Förderwagen absendende Station auszuwählen. Die Eingabe einer entsprechenden Zielinformation kann dabei jeweils bei Absendung des Förderwagens an der ursprünglichen Sendestation - zugleich vorbestimmte Empfangsstation - erfolgen. In diesem Zusammenhang sieht eine vorteilhafte Weiterbildung der Erfindung vor, daß die empfangsstationsbezeichnende Zielinformation bei Ankunft des Förderwagens an der betreffenden Empfangsstation als der vorbestimmten Empfangsstation entsprechende Zielinformation für eine nachfolgende Fahrt von der Empfangsstation zu einer anderen Empfangsstation aufrechterhalten wird. Damit entfällt die manuelle Eingabe einer der absendenden Station entsprechenden Zielinformation; vielmehr wird die aus dem vorhergehenden Sendevorgang vorliegende Zielinformation als der vorbestimmten Empfangsstation entsprechende Zielinformation aufrechterhalten.

Weitere vorteilhafte Ausgestaltungen der Erfindung betreffen die schaltungstechnische Realisierung der Einstellung eines Zählwertes, der fortlaufenden Weiterschaltung des Zählers und des Vergleiches des Zählerstandes mit dem Zählwert. In diesem Zusammenhang ist vorgesehen, daß die Zähler jeweils bei Einschalten des Elektromotors an einen förderwageneigenen Taktgeber angeschlossen sind. Damit ist sichergestellt, daß der Zähler nur während der Fahrt des Förderwagens weitergestellt wird. Wenn die Betriebsspannung einer den Zähler und den Taktgeber umfassenden Steuereinheit von trassenparallelen Strombahnen abgegriffen ist, wird die Betriebssicherheit der Steuerung dadurch erhöht, daß die Zähler mittels einer Ersatzschalteinrichtung bei Ausfall der Betriebsspannung an förderwagenindividuelle Akkumulatoren angeschlossen werden. Um den Strombedarf und damit die Größe der Akkumulatoren gering halten zu können, werden zweckmäßigerweise während dieser Ersatzschaltphase alle anderen Verbraucher, insbesondere die Ausgabe und die Anzeige sowie die Versorgungsspannung für alle andere Steuereinrichtungen abgeschaltet.

Die im Rahmen der Erfindung vorgesehenen schaltungstechnischen Maßnahmen lassen sich insbesondere dann auf
einfachste Weise in die Förderwagensteuerungen integrieren,
wenn die Förderwagen jeweils einen Mikroprozessor zumindest
zum Vergleich der Zählwerte mit dem jeweiligen Zählerstand
aufweisen. Bevorzugt wird dabei eine Ausführungsform, in der
der Mikroprozessor alle logischen Operationen zur Aufnahme
und Auswertung von Zielinformationen, Zählerständen und
Zählwerten ausführt. Dies bietet z. B. die Möglichkeit, für
verschiedene Entfernungen zwischen Sendestationen und Empfangsstationen unterschiedliche maximale Fahrzeiten - die durch
einen bestimmten Zählwert repräsentiert sind, können dabei
jeweils neu aus den Daten für die Sendestation und die
Empfangsstation berechnet oder assoziativ unter entsprechenden Kombinationen von Sendestations- und Empfangsstationsdaten gespeichert werden.

Die Erfindung wird im folgenden anhand eines schematisch dargestellten Ausführungsbeispiels erläutert. Es wird dabei davon ausgegangen, daß sich ein Förderwagen im Bereich einer
Station befindet, so daß die Sende- und Empfangseinrichtungen der Station mit Sende- und Empfangseinrichtungen des Förderwagens korrespondieren.

An einer kombinierten Sende- und Empfangsstation, die durch
eine von einer Weicheneinrichtung abzweigende Stationstrasse
gebildet ist, befindet sich eine Stationssteuerung, die im
wesentlichen durch eine Zieleinstelleinrichtung ZE und eine
Weichensteuerung WS gebildet ist. Die Zieleinstelleinrichtung ZE besteht im wesentlichen aus einer Tastatur T und
einem nachgeschalteten Sender S, während die Weichensteuerung
WS im wesentlichen einen an einen Empfänger E angeschalteten
Vergleicher V aufweist. Die Datenübermittlung von der Stationssteuerung an einen Förderwagen erfolgt über Lichtsender
LS bzw. Lichtempfänger LE, die durch steuerbare Leuchtdioden bzw. Fototransistoren gebildet sein können.

Jeder Förderwagen weist ebenfalls einen Lichtsender LS und einen Lichtempfänger LE auf, die an ein Register R angeschlossen sind, über das Daten in einen Zielspeicher ZS übergeben bzw. von diesem übernommen werden können. Über die Zieleinstelleinrichtung ZE können dabei sowohl Zielinformationen, die der nächsten anzusteuernden Empfangsstation entsprechen, als auch Zielinformationen für eine Station, zu der der Förderwagen bei Überschreitung einer vorbestimmten Fahrzeit umgelenkt werden soll, und darüber hinaus Zielinformationen für eine Wartungsstation eingegeben werden.

Die an einer Sendestation in den Zielspeicher ZS I eingegebene Information für eine Empfangsstation wird zyklisch dem Lichtsender LS des Förderwagens zugeführt. Wird an einer Stationseinrichtung Übereinstimmung der anliegenden Zielinformation mit einer Stationsadresse erkannt, erfolgt eine Beeinflussung der Weichensteuerung WS, die zu einem Ausschleusen des Förderwagens aus der Fördertrasse führt.

Ein Zähler KZ des Förderwagens dient der Überwachung der Fahrzeit zwischen einer Sende- und einer Empfangsstation. Der (Kurzzeit) Zähler KZ wird von einem förderwageninternen Taktgeber TG immer dann getaktet, wenn ein Statusregister SR1 durch die Inbetriebnahme eines Förderwagenmotors M gesetzt ist. Die Rückstellung des Kurzzeit-Zählers KZ erfolgt durch ein zweites Statusregister SR2, das bei jedem Öffnen eines einen Behälterraum des Förderwagens verschließenden Deckels mittels eines Deckelkontaktes d gesetzt wird.

Ein zweiter Zähler LZ dient der Einhaltung eines bestimmten Wartungsintervalls. Dieser (Langzeit-) Zähler LZ wird erst nach erfolgter Wartung durch einen manuell betätigbaren Kontakt m wieder auf Null zurückgestellt.

Der Vergleich der Zählerstände der Zähler KZ, LZ mit eingestellten Zählwerten erfolgt mittels einer Koinzidenzschaltung K, die mit einem weiteren Eingang an einen Zählwertspeicher ZS angeschlossen ist. Der Zählwertspeicher ZS wird von einem Zählwertzuordner ZZ gesetzt. Der Zählwert für den Langzeitzähler LZ kann dabei direkt über die Tastatur T beispielsweise an einer Wartungsstation eingestellt werden. Der Zählwert für den Kurzzeitzähler KZ - also für übliche Fördervorgänge innerhalb der Förderanlage - kann jeweils neu in Abhängigkeit von der Sendestation und der Empfangsstation bestimmt werden. Zu diesem Zweck werden über das Register R jeweils die der Sendestation und der Empfangsstation zugehörigen Zielinformationen aus den Speicherbereichen I, II des Zielspeichers ZS an den Zählwertzuordner ZZ übertragen. Im Zählwertzuordner ZZ sind - beispielsweise in Listenform - zu jeder Kombination von Sende- und Empfangsstation Zählwerte gespeichert; der jeweilige ermittelte Zählwert wird dann an den Zählwertspeicher ZS übertragen.

Bei Koinzidenz des Zählerstandes eines der Zähler KZ, LZ mit dem korrespondierenden Zählwert beeinflußt die Koinzidenzschaltung K eine Registersteuerung RS derart, daß statt der Zielinformation des Zielspeicherbereichs ZSI - Zielkennzeichen der eigentlichen Empfangsstation - die in dem Speicherbereich ZS II bzw. bei Erreichen des vom Langzeitzähler LZ überwachten Wartungsintervalls die im Speicherbereich ZS III gespeicherte Zielinformation über das Register R an den Lichtsender LS des Förderwagens abgegeben wird.

Die eng an die angestrebte Funktion angelehnte Schaltungsanordnung kann in der Praxis durch eine Mikrocomputeranordnung ersetzt werden, in der alle Befehlsoperationen, wie z. B. Einspeichern der Zielinformationen und der Zählwerte sowie Bestimmung unterschiedlicher Zählwerte aus unterschiedlichen Zielinformationen in einem Lesespeicher, die Zielinformationen und die Zählwerte in einem Schreib-Lesespeicher organisiert sind und die logischen Rechen- und Vergleichsaufgaben vom Mikroprozessor mit Hilfe eines mikrocomputerinternen Bus-Systems bewältigt werden.

1 Figur
11 Patentansprüche

**0127566**

<u>Patentansprüche</u>

1. Förderanlage mit auf Fahrtrassen zwischen Sendestationen und Empfangsstationen mittels eines Elektromotors angetrieben laufenden Förderwagen zum Transport von Akten und/oder fördergutähnlicher Abmessungen bzw. ähnlichen Gewichts und förderwageneigenen Zählern, denen bei Beginn eines Sendevorgangs ein Startsignal und bei Ankunft der Förderwagen an der jeweiligen Empfangsstation ein Stoppsignal zugeführt wird, d a d u r c h   g e k e n n z e i c h n e t , daß in den Förderwagen jeweils ein einer definierten Fahrzeit entsprechender Zählwert gespeichert und aus der Koinzidenz von Zählerstand und Zählwert ein die Fahrt des betreffenden Förderwagens zu einer vorbestimmten Empfangsstation einleitendes Steuersignal abgeleitet wird.

2. Förderanlage nach Anspruch 1,   d a d u r c h
g e k e n n z e i c h n e t ,   daß die Förderwagen einen Behälterraum mit einem Deckel aufweisen, dessen Verschlußzustand mittels einer Kontakteinrichtung (d) überwacht ist und daß aus der Betätigung der Kontakteinrichtung (d) beim Öffnen oder Verschließen des Behälterraumes ein Rückstellsignal für den Zähler (KZ) abgeleitet ist.

3. Förderanlage nach Anspruch 1 oder 2,   d a d u r c h
g e k e n n z e i c h n e t ,   daß die Förderwagen Zielspeicher (ZS) zur Aufnahme von an Sendestationen erzeugten empfangsstationbezeichnenden Zielinformationen und Abgabe der Zielinformationen an mittels Verzweigungsstellen der Fahrtrassen zugeordneten Steuereinrichtungen abfragbarer Informationsgeber (LS) aufweisen und daß bei Koinzidenz von Zählerstand und Zählwert den Informationsgebern (LS) anstelle der empfangsstationbezeichnenden eine der vorbestimmten Empfangsstation entsprechende Zielinformation zugeführt wird.

4. Förderanlage nach Anspruch 3, d a d u r c h g e k e n n z e i c h n e t , daß an den Sendestationen Einstelleinrichtungen (T)·angeordnet sind, die manuell in sie eingegebene Zielinformationen in codierter Form drahtlos an eine entsprechend ausgebildete Empfangseinrichtung (LE) eines im Bereich der Einstelleinrichtungen befindlichen Förderwagens abgeben.

5. Förderanlage nach Anspruch 1, d a d u r c h g e k e n n z e i c h n e t , daß eine an der Empfangsstation angeordnete Überwachungseinrichtung bei Ankunft eines Förderwagens im Sinne einer Rückstellung des Zählers auf diesen einwirkt.

6. Förderanlage nach einem der Ansprüche 3 bis 5, d a d u r c h g e k e n n z e i c h n e t , daß die empfangsstationsbezeichnende Zielinformation bei Ankunft des Förderwagens an der betreffenden Empfangsstation als der vorbestimmten Empfangsstation entsprechende Zielinformation für eine nachfolgende Fahrt von der Empfangsstation zu einer anderen Empfangsstation aufrechterhalten wird.

7. Förderanlage nach einem der Ansprüche 1 bis 6, d a d u r c h g e k e n n z e i c h n e t , daß die Zähler (KZ, LZ) jeweils bei Einschalten des Elektromotors (M) an einen förderwageneigenen Taktgeber (TG) angeschlossen sind.

8. Förderanlage nach Anspruch 7, d a d u r c h g e k e n n z e i c h n e t , daß die Betriebsspannung einer die Zähler (KZ, LZ) und den Taktgeber (TG) umfassenden Steuereinheit von trassenparallelen Strombahnen abgegriffen ist und daß mittels einer Ersatzsschalteinrichtung bei Ausfall der Betriebsspannung die Zähler (KZ, LZ) an förderwagenindividuelle Akkumulatoren angeschlossen werden.

9. Förderanlage nach Anspruch 1 und einem der Ansprüche 2 bis 8, d a d u r c h g e k e n n z e i c h n e t , daß die Förderwagen jeweils einen Mikroprozessor zumindest zum Vergleich der Zählwerte mit dem jeweiligen Zählerstand aufweisen.

10. Förderanlage nach einem der Ansprüche 1 bis 9, d a d u r c h g e k e n n z e i c h n e t , daß die Förderwagen einen weiteren Zähler aufweisen, der jeweils durch ein aus dem Stoppsignal abgeleitetes Setzsignal inkrementiert wird.

11. Förderanlage nach Anspruch 10, d a d u r c h g e k e n n z e i c h n e t , daß aus der Koinzidenz des Zählerstandes des weiteren Zählers mit einem eingestellten Zählwert ebenfalls ein die Fahrt des betreffenden Förderwagens zu einer vorbestimmten Empfangsstation einleitendes Steuersignal abgeleitet wird.

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-3 318 260  (GILLESPIE)<br>* Ansprüche *<br><br>--- | 1 | B 61 L    3/00<br>B 61 L   23/00<br>B 61 L   27/04 |
| A | AT-B-  291 853  (BÜRO PATENT)<br>*  Ansprüche; Seite 1, Zeile 26 -<br>Seite 3, Zeile 34 *<br><br>--- | 3,4 | |
| A | US-A-4 179 739  (VIRNOT)<br>* Ansprüche *<br><br>----- | 1 | |

|  | RECHERCHIERTE SACHGEBIETE (Int. Cl. ³) |
|---|---|
| | B 61 L |

Der vorliegende Recherchenbericht wurde für alle Patentansprüche erstellt.

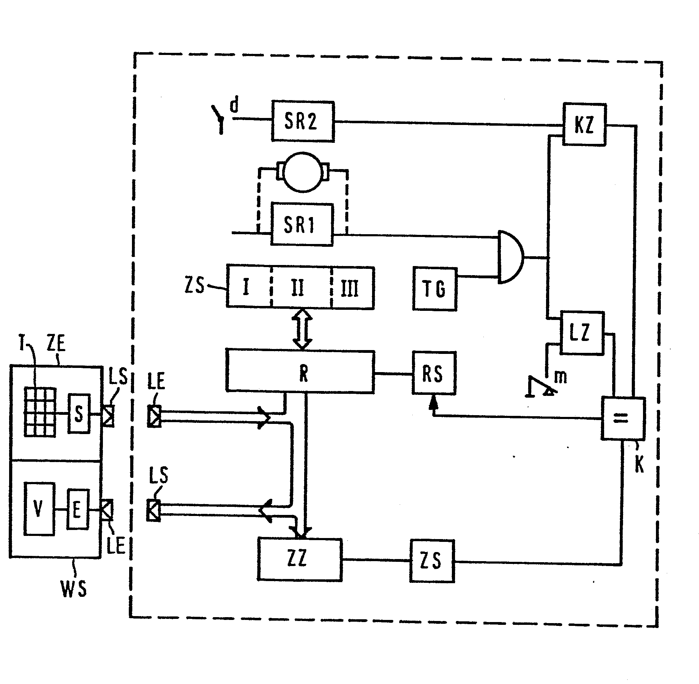

| Recherchenort<br>DEN HAAG | Abschlußdatum der Recherche<br>03-08-1984 | Prüfer<br>REEKMANS M.V. |
|---|---|---|